# EUROPEAN PATENT SPECIFICATION

(11) **EP 2 094 920 B1**
(45) Date of publication and mention of the grant of the patent: **28.09.2016**
(21) Application number: 07848562.0
(22) Date of filing: 17.12.2007
(51) Int. Cl.: B64D 7/00, F42B 39/24, F42D 5/045, E04H 9/04

(54) **A BARRIER**
BARRIERE
BARRIÈRE

(30) Priority: 18.12.2006 GB 0604722; 13.06.2007 GB 0711405
(43) Date of publication of application: 02.09.2009
(73) Proprietor: THE SECRETARY OF STATE FOR DEFENCE, London SW1A 2HB (GB)
(72) Inventor: BARNES, Ian, Bristol BS34 8JH (GB); THOMAS, Bryn, Bristol BS34 8JH (GB)
(74) Representative: Phillips, Thomas Edward
(86) International application number: PCT/GB2007/004822
(87) International publication number: WO 2008/075008

(56) References cited:
- WO-A-91/07275
- WO-A-98/44309
- WO-A-2006/037026
- DE-C- 954 995
- GB-A- 2 077 802
- US-A- 5 814 250

## Description

This invention relates to a barrier and more particularly to a barrier suitable for mitigating the effects of an explosion.

It is known that if an explosive device is detonated, it can detonate another explosive device nearby through the effect of the blast wave generated, and/or by the impact of fragments of the exploded device. In a situation where there are many explosives or explosive devices within a close proximity of one another, it is essential to protect as many items as possible from the risk of being detonated by a nearby explosion.

When an explosive device is detonated there are three principle mechanisms by which another device may be caused to detonate, termed a sympathetic explosion. Firstly, the blast wave caused by the explosion of a first device can impact a nearby device with enough force to detonate it or at least damage it. However, the blast wave degrades quickly so the risk of devices being detonated falls off quickly with distance. Secondly, the fragments of the exploded device and any other items nearby can become projectiles which radiate out from the device. These fragments, termed incident material, can impact a device with enough energy to detonate the device. The incident material can also cause damage to the device which could render it unstable and vulnerable to detonation. Thirdly, the blast wave can lift and/or carry objects in its path which then themselves become projectiles which can damage or detonate other devices.

An explosive device can be anything from a simple firework to a hi-tech military missile or bomb which contains and explosive material. The detonation of such an explosive device is caused by a shockwave propagating through the explosive material contained within a device. The explosive force is released in a direction perpendicular to the surface of the explosive which is often shaped to follow the internal contours of the device.

Where the explosive device is a bomb, the bomb typically has a casing which has a first end and a second end distal from the first end. The first end is a base plate and the second end is often shaped to improve the aerodynamics of the bomb. The casing contains an explosive material.

Fragments from a 1000lb (454.55kg) bomb can be expected to travel side on to a radius of 1.3km and end on (from the base plate) to a radius of 1.65km in an unmitigated event, i.e. an explosion where no barrier is used. As can be expected, it is desirable to prevent the fragments travelling such a distance.

Previous trials for mitigation of such 1000lb (454.55kg) bombs have shown that a second such explosive device, hereinafter termed an acceptor bomb, can be initiated by penetrating high velocity fragments from the detonated explosive device, hereinafter termed the donor bomb, from incident material or from the impact of the subsequently driven mitigation barrier. So, it is necessary to slow down the incident material to a speed where if they do contact an explosive device it is not detonated. A review of current fragment attack literature indicated a fragment strike velocity in the region of 600m/s (7.4kJ energy) as the threshold below which no sympathetic explosion was anticipated for any donor bomb. For experiments using a 1mm thick aluminium shield around the explosives, the threshold appeared to rise to 800m/s (13kJ). Thus for all subsequent research, the inventors have used the region of 600 - 800m/s as a target to which the barriers must retard the velocity of the incident material.

It is known to use a barrier in a situation where explosives are stored or where there is the possibility that an explosion could occur. Such barriers may be reactive, for example, reactive armour, or passive, which do not have active components. Concrete has been employed in the past to make a passive barrier to withstand the destructive force of an explosion, such as the detonation of a bomb. However, barriers made from concrete take time to construct and once constructed are permanent. In a conflict situation, for example, it is required that explosive devices, such as missiles, are moved around and therefore the concrete barriers which have been built become disused and further barriers need to be constructed elsewhere. It is evident that this practice requires much time and material. One solution to this problem has been to use water filled barriers. Water is well known in the art for mitigating blasts. A water filled barrier may comprise one or more containers filled with water which is/are placed between the explosive device(s) and the item(s) to be protected. The water filled barrier overcomes the previous problem as the barrier can be removed after use. However, the barrier needs to be erected where there is an adequate water supply. In an area where a water supply is poor the water to fill the containers needs to be transported. The barriers are often bulky which can pose transportation problems and add to the cost of using them. Also, the act of filling the containers with water will take time, as will emptying them. Once the water barrier is in place it will prevent shock waves and particulates from detonating nearby explosives by acting as a shield. However, there is the possibility that the resulting blast and shock waves can move this barrier and cause it to impact the item being protected which could result in physical damage to the item which in turn could cause it to detonate or become vulnerable to detonation.

It is recommended to have a minimum stand off distance of at least 1 m between the donor bomb and any barriers to ensure that weapon fragments strike the barrier before the barrier is disrupted by the blast shock. This is the case for the composite barrier disclosed in patent application no. PCT/GB2006/004722. The barrier in this application was invented by the same inventors as the present barrier. It comprises a portable barrier which is capable of disintegrating harmlessly in the course of its effectiveness. This barrier is suitable for use where the stand-off is about 1 metre or more and has been proven in trials to mitigate against the effect of detonations of various military munitions. With this barrier the fragments of the bomb overtake the shockwave where the distance between the bomb and barrier is greater than or equal to 1 metre, so the barrier addresses the fragments before the shock wave disrupts the barrier. However, when the distance between the barrier and the explosion is less than 1 metre, the barrier has to deal with the shock wave first which could, in some instances, begin to destroy or disrupt the barrier, thus rendering the item to be protected vulnerable to impact by the blast wave and any incident material. Also, where the distance between the barrier and explosion is less than 1 metre, the barrier itself can present an impact threat to the item to be protected.

The distance between the bombs under a typical military fighter aircraft is less than 1 metre, and is typically only about 0.78m so a different barrier needs to be used to protect these devices. Document US-A-5814250 shows a passive barrier for retaining blast fragments, wherein the barrier is constructed of a shock absorbing foam material.

It is an object of the present invention to provide a barrier which is simple, cost effective, quick and easy to put in place and remove, which is small, relatively light and portable and which provides adequate shielding from an explosion, even at small stand-off distances where the blast wave arrives either prior to or simultaneous with the incident material and which does not itself become a projectile capable of detonating an explosive device in the event of a blast.

Accordingly, the invention provides a passive barrier for mitigating blast waves and decelerating incident material to reduce the risk of sympathetic explosions at reduced stand-off distances, which is configured to redirect the force of an incident blast wave and reduce the momentum of any incident material wherein the barrier is constructed of a shock absorbing foam material.

The barrier according to the invention will fragment which means that as the barrier moves under the force of the blast, it disintegrates and will break up into smaller pieces which are not heavy enough to cause detonation of a nearby device as they do not have a mass great enough to cause damage if they impact a device. The barrier can be designed to fully arrest incident material if the sensitivity of the acceptor device requires. Otherwise, it is not always necessary for the barrier to fully arrest the projectiles, but to retard the velocity of the projectiles to such an extent that they no longer present a sympathetic explosion threat and therefore reduce the likelihood of a maximum credible event.

The barrier according to the present invention can, for example, be used under aircraft where the distance between the explosive devices is less than 1 metre. Due to the preferred material used to construct the barrier, the barrier is able to disintegrate quickly and therefore can be used where the distance between the barrier and the explosive device is less than 1 metre.

The barrier is advantageously constructed of a polyurethane foam. More advantageously, the foam is a rigid polyurethane foam and is even more advantageously selected from the Last-a-Foam ® FR3700 series produced by General Plastics for packaging purposes which are closed cell rigid polyurethane foams. The density of the foam chosen for a barrier is dependent upon the explosive charge it is to protect against.

The barrier can be any size depending upon its desired use. For example, it is advantageous to have a barrier which is the same size as or bigger than the device to be protected or to be protected against so as to ensure that as much of the device(s)/items are protected. Also, if the barrier is bigger than the item to be protected then accurate placement of the barrier may not be so crucial. This will of course be advantageous where there is little time to ensure accurate positioning, such as in a conflict situation or where a threat has only just been identified. However, the barrier can be smaller than the explosive device so long as it protects the assessed vulnerable area.

The shape of the barrier also depends upon its intended use. For example, in the preferred use the barrier is used to protect one bomb from the other under a typical military fighter aircraft as it is not known which, if either, of the bombs is likely to detonate. In this situation the sides of the barrier which are most proximate to the bombs are configured to redirect the force of an incident blast wave. In a situation where an explosive device is to be placed so as to protect a non-explosive device or object, such as a vehicle or a person, it is only necessary for the barrier to be configured to redirect the force of an incident blast wave on the side proximate to the explosive device. In either of these embodiments, the barrier can be configured to redirect the force of the blast wave by angling the sides proximate to the items to be protected. For example, if it is required to redirect the blast wave above and below the barrier to the same extent, then an apex is formed which aligns with the central line of the device to be protected. If the blast wave needs to be angled up or down relative to the explosive device, then the side of the barrier proximate to the device slopes out or in respectively from the top of the barrier. The side of the barrier distal to the explosive device may be of any shape such as planar, curved or angled. Shaping the barrier in this way ensures that the blast wave is deflected around the barrier so as to reduce the blast loading on it, thereby reducing the velocity by which the mass of the barrier is driven at the item(s) to be protected and consequently reduces the likelihood of substantial damage to the acceptor munitions at very low standoff distances.

The barrier is advantageously substantially diamond shape in the cross section perpendicular to a first explosive device. The exterior of the barrier forming the diamond cross section can be planar, concave, convex or any other configuration. Most advantageously, the barrier is shaped to have all four internal angles at about 90°. The diamond shape is thought to redirect the blast wave from the explosion around the barrier. The loading of the blast wave is deflected from the apex and along the barrier so that the pressure of the wave is spread over a greater area than would be the case with a flat surface. As much of the blast force is deflected there is less force left to move the barrier than with a barrier having a flat surface. It is also believed, although the inventors do not wish to be bound by theory, that the diamond shape causes the fragments of the exploded device to move at different velocities and hence the fragments and barrier do not move together at the same speed.

The barrier will be of particular use in situations where there are reduced standoff distances e.g. under a typical military fighter aircraft. The barrier may be suspended from the central pylon of the aircraft to locate it centrally between the two bombs. Alternatively, the barrier may be mounted or supported in a frame, holder or on wheels whereby it can be manoeuvred into place. Preferably, the barrier is mounted or supported in a frame which is capable of being manoeuvred into place quickly and easily. The frame may have height adjusting means so that it may fit under an empty or laden aircraft such that the barrier itself is aligned with the explosive device or item to be protected. This may be achieved by spring loading the frame or by jacking or other such height adjusting means. The frame may further comprise braking or choking means for maintaining it in place. The frame can be made of any suitable material for use in a number of environmental conditions. The barrier may also be used to protect weapons on different aircraft. Again, the barrier can be placed where it is needed.

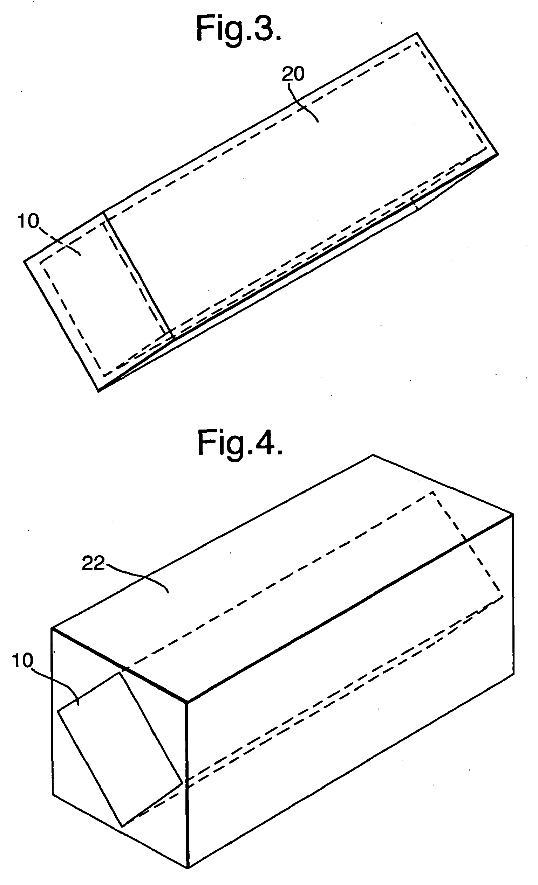

In another embodiment, the barrier may have a casing to support it and to provide protection from minor impact damage. It is further advantageous that the casing is water tight. The casing may enclose the entirety of the barrier or may partially surround the barrier to afford it some protection from being handled, the environment in which it is used and the weather. The casing may fit closely around the barrier or there may be an airgap formed between the casing and the barrier, as is evident with the square configuration shown in figure 4. It has been shown that if a small airgap exists between the barrier and the outer casing there is no effect on the performance of the barrier. A preferred material for the casing is polyethylene but any suitable material can be used. Further, it is advantageous that the polyethylene is about 10mm thick. The barrier casing may include stiffening means which can support the barrier. The barrier with casing may be mounted or supported in a frame or holder as previously described.

Although the invention can be employed in close proximity to explosives and explosive devices such as bombs and missiles, it is not limited to such use. The barrier can be placed between torpedoes in a submarine, between stationary vehicles carrying explosive devices or in civil or military explosives stores. The barrier can also be used in a vehicle for transporting and/or storing explosives. The barrier can further be used to surround a vehicle or vehicles to afford them increased protection. The barrier could also be used for packaging explosives or explosive devices for transportation and storage. These uses are purely for illustration and do not restrict the scope of use of the invention.

The invention will now be described with reference to the accompanying figures:
Fig. 1 is an end on view of a barrier according to the present invention suspended from the central pylon of an aeroplane.
Fig. 2 is a plan view of the barrier positioned between two bombs.
Fig. 3 shows the barrier of the invention with a casing
Fig. 4 shows the barrier of the invention with a square casing
Figs. 5a - 5d show the barrier in different configurations for directing the blast wave.

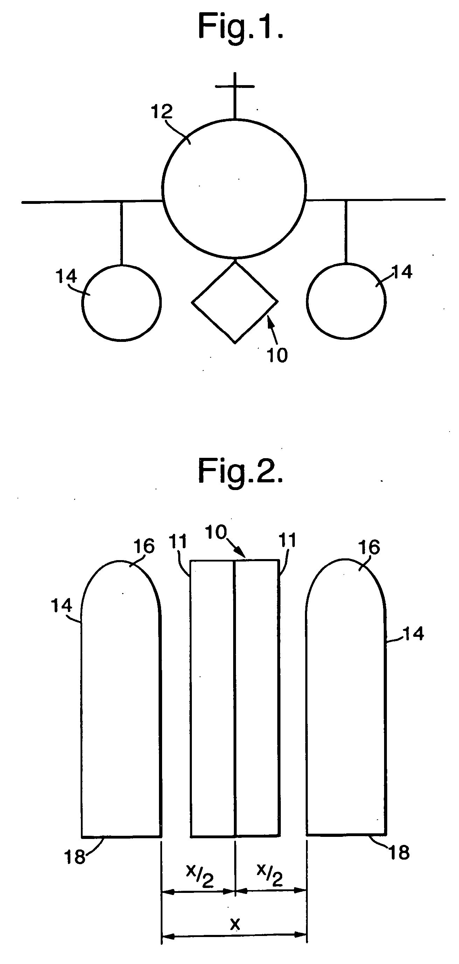

Fig. 1 shows the barrier 10 suspended from the underside of an aeroplane 12 which is positioned between two bombs 14. The barrier is in the advantageous diamond cross section configuration which will provide protection to/from detonation of either bomb 14.

Fig. 2 is a plan view of the barrier 10 from above, which is positioned halfway between two bombs 14. The barrier 10 is centred between the two bombs parallel with the side faces of the barrier 11 and aligned so that the noses 16 and bases 18 of the bombs are shielded from one another by the barrier 10. The barrier is placed halfway between the two bombs so as to protect one from the other. The distance between the bombs (*x*) is only 0.78 metres under a typical military fighter aircraft.

Fig. 3 shows the barrier 10 surrounded by a casing 20 which is shaped to follow the contours of the barrier (shown in a broken line) closely. The casing is close fitting but has been shown with a small airgap for clarity of drawing.

Fig. 4 shows the barrier 10 with a square casing 22. There is an airgap around the barrier due to the square shape of the casing 22 relative to the diamond shape of the barrier 10.

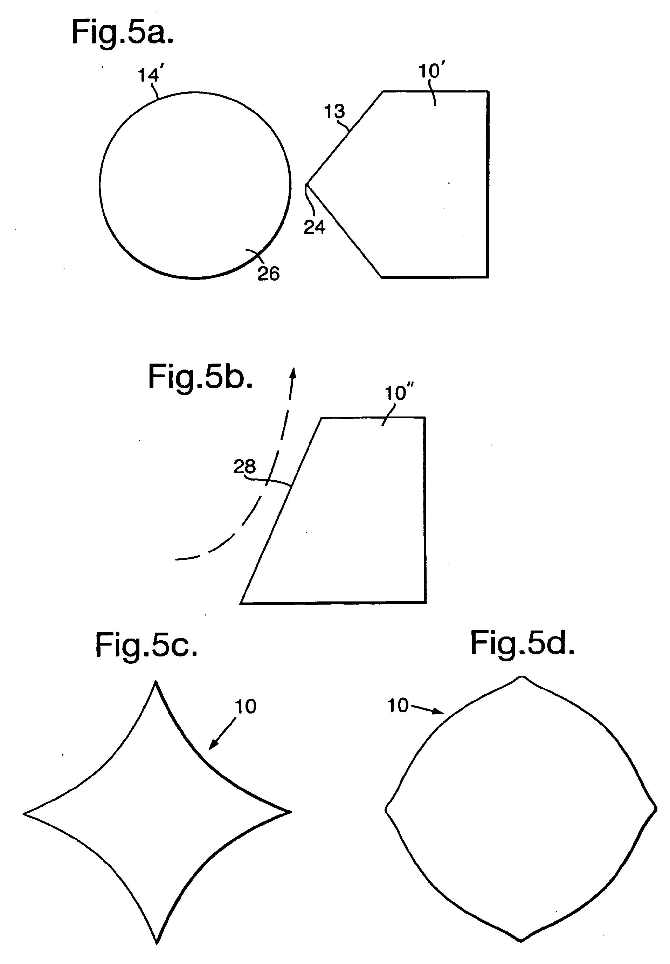

Fig. 5a shows a barrier 10' having an angled side 13 proximate to an explosive device 14'. The apex 24 of the angled side aligns with the centre line 26 of the device 14'. Fig. 5b shows a barrier 10" having a slope 28 which will direct the blast wave upwards, as shown by the dotted line. The barrier 10" can be inverted so that the slope 28 will redirect the blast wave downwards.
Fig. 5c and 5d show the exterior of the barrier 10 having concave and convex configuration whilst still maintaining a substantially diamond shaped cross section.

Trials have proven the success of a barrier according to the present invention when used to protect against the detonation of a 1000lb (454.55kg) bomb. The trial was set up to replicate the use of the barrier under a typical military fighter aircraft with the separation between the bombs being 0.78m and having a barrier with a diamond cross section midway between the two. One of the 1000lb (454,55kg) bombs was filled with concrete to be an acceptor bomb so that the effects of stand-off distance, barrier thickness, mass and the physical damage imparted to the concrete filled bomb could be analysed and recorded after the controlled detonation of a live bomb to see how much damage was caused to the device. Polyurethane barriers with various nominal crush strengths were tested as is shown in table 1.

**Table 1: Polyurethane foam reference numbers, their corresponding nominal crush strength and performance.**

| Foam number | Nominal Crush strength (MPa) | Damage to acceptor bomb |
|---|---|---|
| 3715 | 5 | Slight distortion, fragment strikes |
| 3718 | 7 | Slight distortion, many fragment strikes |
| 3725 | 12.5 | Slight distortion, few fragment strikes |
| 6725 | 13.5 | Slight distortion, few fragment strikes |
| 3730 | 17.5 | No significant distortion, few fragment scuff marks. No detonation when acceptor bomb was a live bomb. |
| No barrier | n/a | Significant fragment strikes and considerable distortion either of which is enough to trigger a sympathetic explosion |

All of the barriers tested greatly reduced the number and extent of impact marks on the acceptor bombs compared to not having a barrier present. When a 1000lb bomb was detonated the concrete filled acceptor bomb the other side of the barrier to the explosion only received a few scuff marks caused by fragments and was only slightly distorted. This amount of damage was deemed not to be enough to cause detonation of a live device. The 17.5MPa crush strength foam showed the best result in this trial as there was minimal damage to the acceptor bomb.

To prove this, the inventors used a live donor bomb, which was detonated remotely, and a live acceptor bomb, each separated from the other by a distance of 0.78m with a 17.5MPa crush strength foam barrier placed between them. The barrier mitigated against a sympathetic detonation by retarding the velocity of the fragments and lessening the effects of the blast wave. Only a few fragment scuff marks were visible on the acceptor bomb casing and there was no significant distortion. It was evident that the damage was minimal and so the acceptor bomb was unreacted with minimum damage. After detonation of the bombs there were no remains of the barriers.

As mentioned previously, the crush strength of the rigid polyurethane foam depends upon the size of the possible explosive event, the weapon fragment type and the distance between munitions. For mitigating against the sympathetic explosion of a 1000lb (454.55kg) bomb, the preferred crush strength of the polyurethane foam is from 5MPa to 17.5MPa and is advantageously in the range of from 12.5MPa to 17.5MPa.

The barrier used in the trials had dimensions of 350mmx350mmx 1350mm and weighed approximately 36kg. However, the barrier can be shaped or sized to the required size which the skilled man would be able to determine. The barrier could be made to the exact required dimensions, but this would mean that it is down to the operator to position it in the exact location for maximum protection. In a conflict situation this is not ideal as precious time could be lost. It is therefore envisaged that the barriers used will be larger than the devices they are protecting from or protecting against detonating.

## Claims

1. A passive barrier (10, 10', 10") for mitigating blast waves and decelerating incident material to reduce the risk of sympathetic explosions at reduced stand-off distances, wherein the barrier is constructed of a shock absorbing foam material **characterized in that** the carrier is configured to redirect the force of an incident blast wave and reduce the momentum of any incident material.

2. A barrier according to claim 1 wherein the barrier is made of a shock absorbing polyurethane foam material.

3. A barrier according to claim 2 wherein the barrier is made of a rigid polyurethane foam.

4. A barrier according to any preceding claim wherein the barrier is of a substantially diamond cross section.

5. A barrier according to any preceding claim wherein the crush strength of the barrier is from 5 to 17.5 MPa.

6. A barrier according to claim 5 wherein the preferred foam crush strength to mitigate against explosion of a 1000lb (454.55kg) bomb at a stand-off of under 1 metre is 17.5MPa.

7. A barrier according to any preceding claim wherein the barrier has a casing (20).

8. A barrier according to claim 7 wherein the casing (20) extends around at least a portion of the barrier.

9. A barrier according to claim 7 or claim 8 wherein the casing (20) follows the shape of the barrier.

10. A barrier according to any of claims 7 to 9 wherein the casing (20) is cuboid.

11. A barrier according to any of claims 7 to 10 wherein the casing (20) is made of polyethylene.

12. A barrier according to any of claims 7 to 11 wherein the casing (20) further comprises stiffening means.

13. A barrier according to any preceding claim wherein the barrier is suspended from the central pylon of an aeroplane (12).

14. A barrier according to any of claims 1 to 12 wherein the barrier is mounted or supported in a frame or holder.

15. A barrier according to any preceding claim wherein the barrier is retained in position by means of a foot, a holder or by suspension.

16. A barrier according to any preceding claim wherein the barrier further comprises wheels to aid positioning..

17. A method of using a barrier according to any preceding claim comprising positioning the barrier between an explosive device and an item to be protected.

## Patentansprüche

1. Passive Barriere (10, 10', 10") zum Abschwächen von Druckexplosionen und zum Abbremsen von auftreffendem Material, um das Risiko sympathetischer Explosionen bei verminderten Sicherheitsabständen zu senken, wobei die Barriere aus einem schockdämpfenden Schaummaterial gefertigt ist, **dadurch gekennzeichnet, dass** die Barriere so ausgebildet ist, dass die Kraft einer auftreffenden Druckwelle umgelenkt wird und die Wucht eines auftreffenden Materials abgeschwächt wird.

2. Barriere nach Anspruch 1, wobei die Barriere aus einem schockdämpfenden Polyurethanschaum gebildet ist.

3. Barriere nach Anspruch 2, wobei die Barriere aus einem steifen Polyurethanschaum gebildet ist.

4. Barriere nach einem der vorhergehenden Ansprüche, wobei die Barriere einen in etwa rautenförmigen Querschnitt aufweist.

5. Barriere nach einem der vorhergehenden Ansprüche, wobei die Barriere eine Druckfestigkeit im Bereich von 5 bis 17,5 MPa aufweist.

6. Barriere nach Anspruch 5, wobei die bevorzugte Schaumdruckfestigkeit zum Abschwächen einer Explosion einer 1000 lb (454,55 kg)- Bombe bei einem Abstand von weniger als 1 m 17,5 MPa beträgt.

7. Barriere nach einem der vorhergehenden Ansprüche, wobei die Barriere ein Gehäuse (20) aufweist.

8. Barriere nach Anspruch 7, wobei sich das Gehäuse (20) um zumindest einen Teil der Barriere herum erstreckt.

9. Barriere nach Anspruch 7 oder Anspruch 8, wobei die Form des Gehäuses (20) der Form der Barriere entspricht.

10. Barriere nach einem der Ansprüche 7 bis 9, wobei das Gehäuse (20) ein Quader ist.

11. Barriere nach einem der Ansprüche 7 bis 10, wobei das Gehäuse (20) aus Polyethylen gefertigt ist.

12. Barriere nach einem der Ansprüche 7 bis 11, wobei das Gehäuse (20) ferner Versteifungsmittel aufweist.

13. Barriere nach einem der vorhergehenden Ansprüche, wobei die Barriere an dem zentralen Pylon eines Flugzeugs (12) aufgehängt ist.

14. Barriere nach einem der Ansprüche 1 bis 12, wobei die Barriere an einem Rahmen oder einer Halterung befestigt ist oder von diesen getragen wird.

15. Barriere nach einem der vorhergehenden Ansprüche, wobei die Barriere mit Hilfe eines Ständers, einer Halterung oder einer Aufhängung in Position gehalten wird.

16. Barriere nach einem der vorhergehenden Ansprüche, wobei die Barriere ferner Räder zur Unterstützung der Positionierung aufweist.

17. Verfahren zur Verwendung einer Barriere nach einem der vorhergehenden Ansprüche, wobei das Verfahren ein Positionieren der Barriere zwischen einem Sprengkörper und einem zu schützenden Gegenstand umfasst.

## Revendications

1. Barrière passive (10, 10', 10") pour atténuer les ondes de choc et décélérer le matériel incident afin de réduire le risque d'explosions par influence à des distances de sécurité réduites, dans laquelle la barrière est construite en un matériau en mousse absorbeur de choc, **caractérisée en ce que** la barrière est configurée de façon à rediriger la force d'une onde de choc incidente et à réduire l'impulsion de tout matériel incident.

2. Barrière selon la revendication 1, dans laquelle la barrière est réalisée en un matériau de mousse de polyuréthane, absorbeur de choc.

3. Barrière selon la revendication 2, dans laquelle la barrière est réalisée en mousse de polyuréthane rigide.

4. Barrière selon l'une quelconque des revendications précédentes, dans laquelle la barrière est constituée d'une section transversale sensiblement en diamant.

5. Barrière selon l'une quelconque des revendications précédentes, dans laquelle la résistance à l'écrasement de la barrière est de 5 à 17,5 MPa.

6. Barrière selon la revendication 5, dans laquelle la résistance à l'écrasement de la mousse préférée pour atténuer l'explosion d'une bombe de 1000 livres (454,55 kg) à une distance de sécurité de moins d'un mètre est de 17,5 MPa.

7. Barrière selon l'une quelconque des revendications précédentes, dans laquelle la barrière dispose d'un boîtier (20).

8. Barrière selon la revendication 7, dans laquelle le boîtier (20) s'étend autour d'au moins une partie de la barrière.

9. Barrière selon la revendication 7 ou la revendication 8, dans laquelle le boîtier (20) suit la forme de la barrière.

10. Barrière selon l'une quelconque des revendications 7 à 9, dans laquelle le boîtier (20) est cubique.

11. Barrière selon l'une quelconque des revendications 7 à 10, dans laquelle le boîtier (20) est réalisé en polyéthylène.

12. Barrière selon l'une quelconque des revendications 7 à 11, dans laquelle le boîtier (20) comprend en outre des moyens de renfort.

13. Barrière selon l'une quelconque des revendications précédentes, dans laquelle la barrière est suspendue à partir d'un pylône central d'un aéroplane (12).

14. Barrière selon l'une quelconque des revendications 1 à 12, dans laquelle la barrière est montée ou supportée dans un cadre ou support.

15. Barrière selon l'une quelconque des revendications précédentes, dans laquelle la barrière est retenue en position au moyen d'un pied, d'un support ou par une suspension.

16. Barrière selon l'une quelconque des revendications précédentes, dans laquelle la barrière comprend en outre des roues pour aider au positionnement.

17. Procédé d'utilisation d'une barrière selon l'une quelconque des revendications précédentes comprenant le positionnement de ladite barrière entre un dispositif explosif et un élément à protéger.
